# EUROPEAN PATENT APPLICATION

(11) **EP 4 729 040 A1**
(43) Date of publication of application: **22.04.2026**
(21) Application number: 25210049.0
(22) Date of filing: 21.10.2025
(51) Int. Cl.: A61G 17/08

(54) **ATTACHMENT SYSTEMS FOR A FUNERAL URN AND METHOD OF USING SAME**

(30) Priority: 21.10.2024 US 202463709552 P; 08.07.2025 US 202563840065 P
(71) Applicant: FederalEagle, LLC, West Chester, Ohio 45246 (US)
(72) Inventor: PAULSON, Scott, Chester, OH 45246 (US); HOSTERMAN, Matthew, Chester, OH 45246 (US); REAVES, Donald A., Chester, OH 45246 (US); BENTLEY, Stephen, Chester, OH 45246 (US); BARRY, Adam, Houston, TX 77002 (US); KLAUER, Adam, Houston, TX 77002 (US)
(74) Representative: Patentanwälte Bauer Vorberg Kayser

(57) **Abstract**

An attachment system (80) for securing a funeral urn (10) to funeral article (14) includes a first twist mechanism (82) associated with the funeral urn (10) and a second twist mechanism (84) associated with the funeral article (14). When the first twist mechanism (82) and the second twist mechanism (84) are engaged with each other, the first twist mechanism (82) is rotatable relative to the second twist mechanism (84) to define a locked position, whereby the first and second twist mechanisms (82, 84) are prohibited from axial movement, and an unlocked position, whereby the first and second twist mechanisms (82, 84) are permitted to move axially. Methods of attaching and removing the funeral urn (10) to/from the funeral article (14) using the attachment system (80) are also disclosed.

## Description

### Technical Field

The present invention relates generally to funeral services and relates more specifically to attachment systems for securing a funeral urn to a surface of a funeral article. The present invention also relates to a method of attaching and detaching the funeral urn to/from the surface of the funeral article having the attachment system.

### Background

Funeral services are meant to provide a decedent's living friends and family with a ceremony to celebrate the life of their loved one. The funeral service industry must therefore continuously seek to improve the means and methods of carrying out such ceremonies. In recent years, cremation has increased in popularity within the funeral service industry. When a decedent is cremated, their remains are typically stored in a funeral urn. During the funeral service, the funeral urn is displayed for family and friends to pay their respects. Additionally, the funeral urn is transported between, for example, the funeral home, place of worship, burial site, and possibly other locations. Funeral urns are designed to be aesthetically pleasing for both the decedent and the people attending the funeral service. Due to their typical elongated shape, however, funeral urns can be prone to tipping during display and/or transportation, which can detract from the funeral service.

To prevent the funeral urn from tipping or otherwise moving during funeral services, special support arms may be used. In a typical arrangement, the support arms are adjustably attached to the funeral article on which the funeral urn is being displayed and/or transported. The support arms may be adjusted so as to engage with the outer surface of the funeral urn, thereby preventing the funeral urn from tipping or otherwise moving along or away from the surface of the funeral article on which the funeral urn is positioned. Such support arms are well known in the industry and in many instances are considered the standard in the funeral industry.

While these support arms are widely accepted as a means of securing funeral urns, they can be unsightly and distract from the overall experience and aesthetics of the funeral service. Thus, current approaches for incorporating a decedent's cremated remains into traditional funeral services are lacking, especially with respect to displaying a decedent's remains in a visually appealing manner. Accordingly, there is a need in the funeral industry to provide visually appealing and respectful means for securing funeral urns to the surface of a funeral article during or in relation to funeral services.

### Summary

In a first aspect of the invention, a magnetic attachment system for securing a funeral urn to a surface of a funeral article is disclosed. The magnetic attachment system includes a plurality of magnets configured to be associated with one of the funeral urn or the surface of the funeral article, and a plurality of magnet attraction elements configured to be associated with the other of the funeral urn or the surface of the funeral article. The plurality of magnets having a first pattern the plurality of magnet attraction elements having a second pattern. When the funeral urn is located on the surface of the funeral article, a magnetic attraction force between the plurality of magnets and the plurality of magnet attraction elements is greater than a predetermined threshold force configured to secure the funeral urn to the funeral article.

In one embodiment, the magnetic attachment system may further include a first mounting plate for carrying the plurality of magnets, the plurality of magnets being connected to the first mounting plate in the first pattern. In one embodiment, the first mounting plate may be made of a non-magnetic material, a paramagnetic material, or a ferromagnetic material. For example, the first mounting plate may be made from plastic or steel. In one embodiment, the plurality of magnets may be connected to the first mounting plate by bonding or by using one or more fastening elements. In another embodiment, the plurality of magnets may be embedded in the first mounting plate.

In one embodiment, the magnetic attachment system may further include a second mounting plate for carrying the plurality of magnetic attachment elements, the plurality of magnetic attachment elements being connected to the second mounting plate in the second pattern. In one embodiment, the second mounting plate may be made of a non-magnetic material, a paramagnetic material, or a ferromagnetic material. For example, the second mounting plate may be made from plastic or steel. In one embodiment, the plurality of magnetic attachment elements may be connected to the second mounting plate by bonding or by using one or more fastening elements. In another embodiment, the plurality of magnetic attachment elements may be embedded in the second mounting plate.

In one embodiment, each of the plurality of magnets may include a magnet disc and each of the plurality of magnet attraction elements may include an attraction disc. In one embodiment, each of the plurality of magnet attraction elements may be made of a ferromagnetic material (e.g., either magnetized with alternating poles relative to the magnets or non-magnetized). In one embodiment, the size and shape of each of the plurality of magnets and the size and shape of each of the plurality of magnetic attraction elements may substantially correspond to each other (e.g., substantially the same shape and size).

In one embodiment, the first pattern may include the plurality of magnets circumferentially spaced about a first central axis and at a fixed radius from the first central axis, i.e., in a circular configuration about the first central axis. For example, the plurality of magnets may be uniformly distributed along the circumference of the circle. In one embodiment, the second pattern may include the plurality of magnetic attraction elements circumferentially spaced about a second central axis and at a fixed radius from the second central axis, i.e., in a circular configuration about the second central axis. For example, the plurality of magnetic attraction elements may be uniformly distributed along the circumference of the circle. In one embodiment, the first pattern and the second pattern may substantially correspond to each other.

In a second aspect of the invention, a funeral urn for attachment to a funeral article having a surface with one of a plurality of magnets or a plurality of magnet attraction elements is disclosed. The funeral urn includes an urn body having a bottom wall and at least one side wall extending from the bottom wall. The urn body defines an interior cavity for receiving, for example, a decedent's remains. The funeral urn further includes a mounting plate connected to or connectable to the bottom wall of the funeral urn for magnetically securing the funeral urn to the surface of the funeral article. The mounting plate includes the other of the plurality of magnets or the plurality of magnet attraction elements arranged in a pattern. The magnetic attraction force between the plurality of magnets and the plurality of magnetic attraction elements is configured to be sufficient to secure the funeral urn to the surface of the funeral article.

In one embodiment, the mounting plate may be made from a non-magnetic material, a paramagnetic material, or a ferromagnetic material. For example, the mounting plate may be made from plastic or steel. In one embodiment, the other of the plurality of magnets or the plurality of magnet attraction elements may be connected to the mounting plate by bonding or by using one or more fastening elements. In another embodiment, the other of the plurality of magnets or the plurality of magnet attraction elements may be embedded in the mounting plate.

In one embodiment, each of the other of the plurality of magnets or the plurality of magnet attraction elements may include a disc. In one embodiment, each of the plurality of magnet attraction elements may be made of a ferromagnetic material, such as a magnetized or unmagnetized ferromagnetic material. In one embodiment, the size and shape of each of the other of the plurality of magnets or the plurality of magnet attraction elements may substantially correspond with each other (e.g., substantially the same shape and size).

In one embodiment, the mounting plate may be bonded to the funeral urn or connected to the funeral urn by one or more fastening elements. In one embodiment, the mounting plate may be selectively attachable to and removable from the funeral urn, for example, by a clip or locking arrangement. In another embodiment, the mounting plate may be integrated into the funeral urn.

In a third aspect of the invention, a funeral arrangement is disclosed. The funeral arrangement includes a funeral urn and a funeral article for supporting the funeral urn on a surface of the funeral article. The funeral urn includes an urn body having a bottom wall and at least one side wall extending from the bottom wall, the urn body defining an interior cavity. One of a plurality of magnets or a plurality of magnet attraction elements is connected to the bottom wall of the funeral urn. The surface of the funeral article includes the other of the plurality of magnets or the plurality of magnet attraction elements. When the funeral urn is located on the surface of the funeral article, a magnetic attraction force between the plurality of magnets and the plurality of magnet attraction elements is greater than a predetermined threshold force to secure the funeral urn to the funeral article. In one embodiment, the funeral article may include an urn support, pedestal in a funeral vehicle, floor of a funeral vehicle, ceremonial cart, bier, dais, platform, compartment, or table.

In one embodiment, the funeral arrangement may further include a first mounting plate for carrying the plurality of magnets, the plurality of magnets being connected to the first mounting plate in the first pattern. In one embodiment, the first mounting plate may be made of a non-magnetic material, a paramagnetic material, or a ferromagnetic material. For example, the first mounting plate may be made from plastic or steel. In one embodiment, the plurality of magnets may be connected to the first mounting plate by bonding or by using one or more fastening elements. In another embodiment, the plurality of magnets may be embedded in the first mounting plate.

In one embodiment, the funeral arrangement may further include a second mounting plate for carrying the plurality of magnetic attachment elements, the plurality of magnetic attachment elements being connected to the second mounting plate in the second pattern. In one embodiment, the second mounting plate may be made of a non-magnetic material, a paramagnetic material, or a ferromagnetic material. For example, the second mounting plate may be made from plastic or steel. In one embodiment, the plurality of magnetic attachment elements may be connected to the second mounting plate by bonding or by using one or more fastening elements. In another embodiment, the plurality of magnetic attachment elements may be embedded in the second mounting plate.

In one embodiment, the first pattern may include the plurality of magnets circumferentially spaced about a first central axis and at a fixed radius from the first central axis, e.g., in a circular configuration. For example, the plurality of magnets may be uniformly distributed along the circumference of the circle about the first central axis. In one embodiment, the second pattern may include the plurality of magnetic attraction elements circumferentially spaced about a second central axis and at a fixed radius from the second central axis, e.g., in a circular configuration about the second central axis. For example, the plurality of magnetic attraction elements may be uniformly distributed along the circumference of the circle. In one embodiment, the first pattern and the second pattern may generally correspond to each other.

In a fourth aspect of the invention, a method of attaching a funeral urn to a funeral article is disclosed. The method includes: i) providing the funeral urn, the funeral urn including an urn body having a bottom wall and at least one side wall extending from the bottom wall, the urn body defining an interior cavity, and one of a plurality of magnets or a plurality of magnet attraction elements connected to the bottom wall of the funeral urn; ii) providing the funeral article, the funeral article including a surface for receiving the funeral urn, and the other of the plurality of magnets or the plurality of magnet attraction elements associated with the surface; and iii) positioning the bottom wall of the funeral urn near the surface of the funeral article. In the method, the positioning step generates a magnetic attraction force between the plurality of magnets and the plurality of magnet attraction elements that draws the funeral urn to the surface of the funeral article to seat the funeral urn on the surface of the funeral article. When the funeral urn is seated on the surface of the funeral article, the magnetic attraction force between the plurality of magnets and the plurality of magnet attraction elements is greater than a predetermined threshold force to secure the funeral urn to the funeral article.

In a fifth aspect of the invention, a method of removing a funeral urn from a funeral article is disclosed. The funeral urn includes an urn body having a bottom wall and at least one side wall extending from the bottom wall, the urn body defining an interior cavity, and one of a plurality of magnets or a plurality of magnet attraction elements connected to the bottom wall of the funeral urn. The funeral article includes a surface for receiving the funeral urn, and the other of the plurality of magnets or the plurality of magnet attraction elements associated with the surface. The method includes rotating the funeral urn about a central urn axis from a first orientation to a second orientation, the first orientation having a magnetic attraction force greater than a threshold force, and the second orientation having a magnetic attraction force less than the threshold force, and removing the funeral urn from the surface of the funeral article when the funeral urn is in the second orientation.

In one embodiment, when the funeral urn is in the first orientation, the plurality of magnets and the plurality of magnet attraction elements may define a plurality of magnet/element pairs that are vertically aligned. The vertically aligned configuration in the first orientation maximizes the magnetic attraction force between the plurality of magnets and the plurality of magnetic attraction elements to secure the funeral urn to the surface of the funeral article. In one embodiment, when the funeral urn is in the second orientation, the plurality of magnets and the plurality of magnet attraction elements define a plurality of magnet/element pairs that are vertically misaligned. The vertically misaligned configuration decreases the magnetic attraction force between the plurality of magnets and the plurality of magnetic attraction elements to allow the funeral urn to be lifted from the surface of the funeral article by, for example, funeral personnel.

In a sixth aspect of the invention, an attachment system for securing a funeral urn to a surface of a funeral article is disclosed. The attachment system includes a first twist mechanism configured to be associated with the funeral urn, where the first twist mechanism includes one of an inner locking protrusion or a locking boss, and a second twist mechanism configured to be associated with the surface of the funeral article, where the second twist mechanism includes the other of the inner locking protrusion or the locking boss. When the first twist mechanism and the second twist mechanism are engaged with each other, the first twist mechanism is rotatable relative to the second twist mechanism to define a locked position, whereby the first and second twist mechanisms are prohibited from axial movement relative to each other, and an unlocked position, whereby the first and second twist mechanisms are permitted to move axially relative to each other.

In one embodiment, the inner locking protrusion may include at least one locking feature, the locking boss may include at least one locking feature, the at least one locking feature on the inner locking protrusion may be engaged with the at least one locking feature in the locked position, and the at least one locking feature on the inner locking protrusion may be disengaged from the at least one locking feature on the locking boss in the unlocked position.

In one embodiment, the at least one locking feature on the inner locking protrusion may include a first locking wall, a second locking wall, and a groove disposed between the first and second locking walls. The first locking wall and the second locking wall may have different heights relative to a central axis defined by the inner locking protrusion. In one embodiment, the inner locking protrusion may include a plurality of locking features, and the plurality of locking features may be distributed in a circumferential direction about the central axis of the inner locking protrusion. For example, the plurality of locking features on the inner locking protrusion may be uniformly distributed in the circumferential direction about the central axis of the inner locking protrusion. Additionally, adjacent locking features of the plurality of locking features may be separated from each other by a spacer.

In one embodiment, the at least one locking feature on the locking boss may include a first locking tab, a second locking tab, and a groove disposed between the first and second locking tabs. The first locking tab and the second locking tab may have different heights relative to a central axis defined by the locking boss. In one embodiment, the locking boss may include a plurality of locking features, and the plurality of locking features may be distributed in a circumferential direction about the central axis of the locking boss. For example, the plurality of locking features on the locking boss may be uniformly distributed in the circumferential direction about the central axis of the locking boss.

In one embodiment, the first twist mechanism may include at least one alignment feature, and the second twist mechanism may include at least one alignment feature. The alignment features are configured to indicate the locked and unlocked positions of the first and second twist mechanisms and further may ensure the proper orientation of the funeral urn on the funeral article. In one embodiment, the first twist mechanism and the second twist mechanism may include a pair of alignment features.

In one embodiment, the second twist mechanism may include a pair of extension portions extending away from a central axis of the second twist mechanism and on opposite sides thereof. Additionally, in one embodiment, each of the extension portions may include at least one slide channel.

In a seventh aspect of the invention, a funeral arrangement is disclosed. The funeral arrangement includes a funeral urn including an urn body having a bottom wall and at least one side wall extending from the bottom wall that defines an interior cavity, a funeral article including a surface, and the attachment system according to the sixth aspect described above. One of the first twist mechanism or the second twist mechanism is associated with the funeral urn and the other of the first twist mechanism and the second twist mechanism is associated with the funeral article. When the first twist mechanism and the second twist mechanism are engaged with each other, the funeral urn is rotatable relative to the funeral article to define a locked position, whereby the funeral urn and funeral article are prohibited from axial movement relative to each other, and an unlocked position, whereby the funeral urn and the funeral article are permitted to move axially relative to each other.

In one embodiment, the first twist mechanism may be connected to or form part of the bottom wall of the funeral urn, and the second twist mechanism may be connected to or form part of the surface of the funeral article. For example, in one embodiment the first twist mechanism may be bonded to, magnetically attached to, or fastened to the funeral urn. Alternatively, the first twist mechanism may be embedded with the funeral urn. Similarly, in one embodiment, the second twist mechanism may be bonded to, magnetically attached to, or fastened to the funeral article. Alternatively, the second twist mechanism may be embedded with the funeral article. In one embodiment, the funeral article may include one of a floor, compartment, or platform of a funeral vehicle, a ceremonial cart, a bier or dais, and a table.

In yet an eighth aspect of the invention, a method of handling a funeral urn during a funeral service is disclosed. The method includes providing the funeral urn, the funeral urn including an urn body having a bottom wall and at least one side wall extending from the bottom wall that defines an interior cavity, providing the funeral article, the funeral article including a surface, and providing the attachment system according to the sixth aspect described above. One of the first twist mechanism or the second twist mechanism is associated with the funeral urn and the other of the first twist mechanism and the second twist mechanism is associated with the funeral article. The method further includes positioning the funeral urn on the funeral article such that the first twist mechanism engages with the second twist mechanism and rotating the funeral urn relative to the funeral article in a first rotation direction to the locked position thereby securing the funeral urn to the funeral article.

In one embodiment of the method, positioning the funeral urn on the funeral article may further include aligning at least one alignment element on the first twist mechanism with at least one alignment element on the second twist mechanism prior to engaging the first and second twist mechanisms.

In one embodiment of the method, the method may further include rotating the funeral urn relative to the funeral article in a second rotation direction opposite to the first rotation direction to the unlocked position and separating the funeral urn from the funeral article. Thus, the funeral urn may be selectively attached to and removed from the funeral article by way of the twist mechanism.

Additional features and advantages will be set forth in the detailed description which follows, and in part will be readily apparent to those skilled in the art. It is to be understood that the foregoing general description, the following detailed description, and the accompanying drawings are merely exemplary and intended to provide an overview or framework to understand the nature and character of the claims.

### Brief Description of the Drawings

The accompanying drawings, which are incorporated in and constitute a part of this specification, illustrate embodiments of the invention and, together with the Detailed Description given below, serve to explain the invention.
Fig. 1 is a perspective view of a funeral urn secured to a surface of a funeral article using a magnetic attachment system according to an embodiment of the invention.
Fig. 2 is a partial disassembled perspective view of the funeral urn and funeral article illustrated in Fig. 1.
Figs. 3A-3C are partial cross-sectional side views of the funeral urn and funeral article having the magnetic attachment system illustrating the attachment and detachment of the funeral urn from the surface of the funeral article.
Fig. 4 is a perspective view of a funeral urn secured to a surface of a funeral article using a twist lock attachment system according to another embodiment of the invention.
Fig. 5 is a partial disassembled perspective view of the funeral urn and funeral article illustrated in Fig. 4.
Fig. 6 is a bottom perspective view of a first twist mechanism according to one embodiment of the invention.
Fig. 7 is a top perspective view of a second twist mechanism according to one embodiment of the invention.
Fig. 8 is a top perspective view of a second twist mechanism according to another embodiment of the invention.
Fig. 9 is a bottom perspective view of the second twist mechanism illustrated in Fig. 8.
Figs. 10A-10D are partial cross-sectional side views of the funeral urn and funeral article having the attachment system of Fig. 5 illustrating the attachment and detachment of the funeral urn from the surface of the funeral article.

### Detailed Description

The exemplary embodiments described herein are provided for illustrative purposes and are not limiting. Other exemplary embodiments are possible, and modifications may be made to the exemplary embodiments within the scope of the present disclosure. Therefore, this Detailed Description is not meant to limit the scope of the present disclosure.

As described above, solutions for respectfully incorporating a decedent's cremated remains into traditional funeral services in a visually appealing manner are lacking. Various aspects of the present invention address this issue by providing an attachment system that obviates the need for support arms or other support members that distract from the aesthetic features of the funeral urn admired during the funeral service. For example, a magnetic attachment system may be used and includes a mounting plate having one of a plurality of magnets or plurality of magnetic attraction elements that is configured to be connected to the funeral urn. The funeral urn is configured to be located on a surface of a funeral article during the funeral service, such as for display and/or transport purposes. The surface of the funeral article is configured to include the other of the plurality of magnets or plurality of magnetic attraction elements.

When the funeral urn is brought close to the surface of the funeral article, the plurality of magnets and the plurality of magnetic attraction elements self-align such that the plurality of magnets and the plurality of magnetic attraction elements form a plurality of vertically aligned magnet/element pairs, i.e., one on top of the other, when the funeral urn is engaged with the surface of the funeral article. In this "aligned" orientation, the magnet attraction force is above a threshold force sufficient to secure the funeral urn to the surface of the funeral article without moving or tipping during display and/or transport in the normal course. To remove the funeral urn from the surface of the funeral article, funeral personnel first rotate the funeral urn so that the plurality of vertically aligned pairs of magnets and magnetic attraction elements become misaligned. In this misaligned orientation, the magnetic attraction force between the funeral urn and the surface of the funeral article decreases to a value below the threshold force so as to allow funeral personnel to lift the funeral urn from the surface of the funeral article without exerting significantly high effort.

In another approach, a twist lock attachment system may be employed to secure the funeral urn to a funeral article. The twist lock attachment system includes a first twist mechanism associated with the funeral urn and a second twist mechanism associated with the funeral article. The first and second twist mechanisms are configured to engage with each other and move (e.g., rotate) relative to each other between a locked position and an unlocked position. In the locked position, the funeral urn is secured to the funeral article and in the unlocked position, the funeral urn may be attached to or removed from the funeral article.

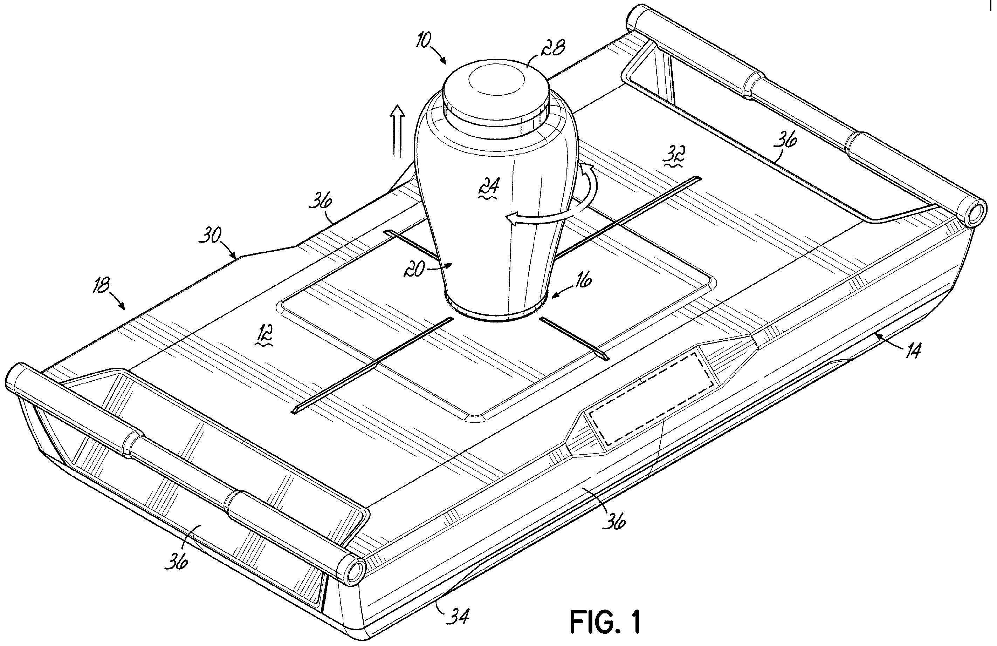

Referring now to the figures, embodiments of a magnetic attachment system for use within the funeral service industry in accordance with the principles of the present invention are shown. Referring now to Fig. 1, the figure shows a funeral urn 10 (referred to hereafter as "urn 10") located on a surface 12 of a funeral article 14 (referred to hereafter as "article 14") during a funeral service. In accordance with an aspect of the invention, the urn 10 is secured to the surface 12 of the article 14 with a magnetic attachment system, generally shown at 16, that will be described in detail below. The magnetic attachment system 16 generates a magnetic attraction for F between the urn 10 and the surface 12 of the article 14 sufficient to prevent the urn 10 from undesirably moving, tipping, etc. so as to become detached or disengaged from the surface 12 of the article 14. The magnetic attraction force to prevent such undesired movements of the urn 10 in the normal course of the activity (e.g., transport, display, etc.) is referred to herein as a threshold magnetic attraction force T (referred to hereafter as "the threshold force T"). Thus, for at least one orientation of the urn 10 on the surface 12 of the article 14, the magnetic attraction force F generated by the magnetic attachment system 16 is greater than the threshold force T to sufficiently secure the urn 10 to the article 14.

Fig. 1 illustrates the urn 10 secured to an urn support 18 by the magnetic attachment system 16. The urn support 18 may be part of an urn carrier system in a funeral vehicle, for example. Such an urn carrier system is more fully disclosed in U.S. Publication No. 2025/0221874, the disclosure of which is incorporated by reference herein in its entirety, and which is owned by the assignee of the present invention. While aspects of the present invention will be described with the article 14 configured as an urn support 18, it should be recognized that the article 14 for which aspects of the invention may be used includes a wide range of funeral service articles. By way of example, and without limitation, the article 14 may take the form of the floor of a hearse; a compartment or raised platform in a hearse; a pedestal in a van, limousine, or other passenger vehicle; a ceremonial cart; a bier or dais; a table; or any other display or transport device involved with a funeral service. Each of these funeral articles 14 includes a surface 12 on which the urn 10 may be configured to be located during the funeral service. Thus, aspects of the present invention should not be limited to the article 14 being the urn support 18 illustrated and described herein.

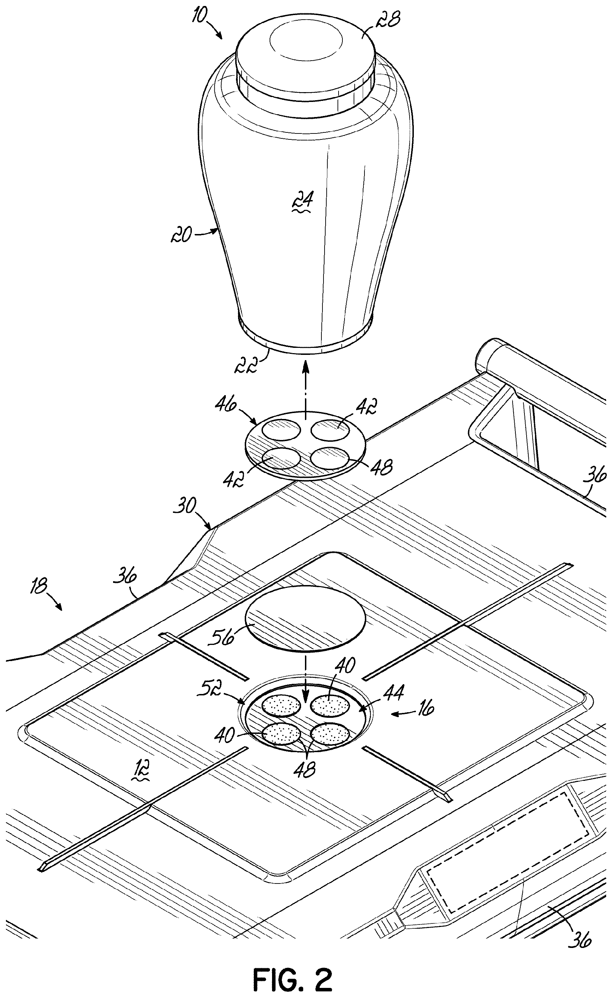

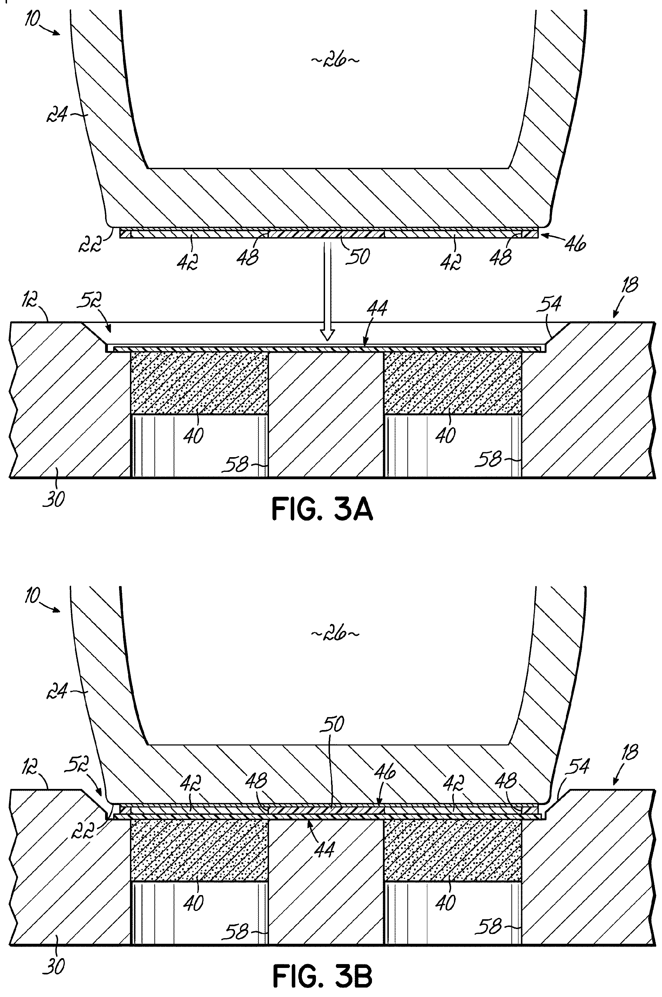

In an exemplary embodiment, and in reference to Fig. 2, the urn 10 includes an urn body 20 having a bottom wall 22 and at least one side wall 24 extending from the bottom wall 22 to define an interior cavity 26 (see Figs. 3A-3C). The urn 10 may further include a cover or lid 28 configured to close off the upper end of the urn 10 and provide selective access to the interior cavity 26 of the urn 10. As is well understood, the interior cavity 26 is configured to hold a decedent's cremated remains. The urn 10 is configured to be aesthetically pleasing and may be ornate in its shape, configuration, design, etc. While many urns 10 are circular in shape, urns 10 may have other shapes as well and remain within the scope of the present invention.

In the embodiment shown in Figs. 1 and 2, the urn support 18 may include a support body 30 having a generally rectangular configuration that defines a top wall 32, a bottom wall 34, and a plurality of side walls 36 extending between the top and bottom walls 32, 34. In this embodiment, the top wall 32 defines the surface 12 on which the urn 10 is to be located. The urn support 18 may be used during the transport of the urn 10 from one location to another location within a funeral vehicle, such as a hearse, limousine, van, etc. For example, the urn support 18 may be used to transport the urn 10 from a funeral home to a place of worship and/or to a burial site. The urn support 18 may also be used to display the urn 10 during funeral services much like caskets, for example. Thus, it is important that the urn 10 be sufficiently secured to the surface 12 of the urn support 18, which is the purpose of the magnetic attachment system 16 discussed herein.

In reference to Fig. 1, and perhaps more to Fig. 2, the magnetic attachment system 16 includes a plurality of magnets 40 associated with either the urn 10 or the urn support 18 and a plurality of magnetic attraction elements 42 associated with the other of the urn 10 or the urn support 18. The plurality of magnets 40 and the plurality of magnetic attraction elements 42 are configured to generate the magnetic attraction force F to secure the urn 10 to the surface 12 of the urn support 18. In one embodiment, and as illustrated in Fig. 2, the plurality of magnets 40 may be associated with the urn support 18 and the plurality of magnetic attraction elements 42 may be associated with the urn 10. In an alternative embodiment, however, the plurality of magnets 40 may be associated with the urn 10 and the plurality of magnetic attraction elements 42 may be associated with the urn support 18 (not shown). A combination of magnets 40 and magnetic attraction elements 42 on each of the urn 10 and the urn support 18 may be possible in a further alternative embodiment.

Each of the plurality of magnets 40 may be permanent magnets formed from various ferromagnetic materials or alloys of ferromagnetic materials including iron, nickel, cobalt, neodymium, boron, etc. Permanent magnets and methods of making permanent magnets are well known and a further description of the magnets 40 will not be provided herein. Each of the plurality of magnetic attraction elements 42 may be formed from materials that are attracted to magnets. For example, the magnetic attraction elements 42 may be formed from various ferromagnetic materials or alloys of ferromagnetic materials including iron, nickel, cobalt, etc. In one embodiment, the ferromagnetic material may be unmagnetized. In an alternate embodiment, however, the ferromagnetic material may be magnetized. In this embodiment, the magnets 40 and the magnetic attraction elements 42 are arranged to have alternating poles to provide the magnetic attraction force F. The magnetic attraction between the permanent magnets 40 and the magnetic attraction elements 42 is what generates the force F that secures the urn 10 to the urn support 18.

In one embodiment, each of the plurality of magnets 40 may have a circular shape and a diameter Dₘ, i.e., disc shaped. In one embodiment, all of the plurality of magnets 40 have substantially the same shape and diameter Dₘ. In a similar manner, each of the plurality of magnetic attraction elements 42 may have a circular shape and a diameter Dₑ, i.e., disc shaped. In one embodiment, all of the plurality of magnetic attraction elements 42 may have substantially the same shape and diameter Dₑ. In one embodiment, the shape and size of the plurality of magnets 40 may substantially correspond to the shape and size of the plurality of magnetic attraction elements 42. Thus, for example, the plurality of magnets 40 and the plurality of magnetic attraction elements 42 may have a circular shape with matching diameters, i.e., Dₘ is equal to Dₑ. Embodiments of the invention, however, are not limited to this configuration. For example, each of the plurality of magnets 40 and the plurality of magnetic attraction elements 42 may have other shapes, such as square, rectangular, triangular, diamond, or other regular or non-regular shapes. Additionally, while it is preferred that the plurality of magnets 40 and the plurality of magnetic attraction elements 42 have the same size, in an alternate embodiment, the sizes may differ. Such embodiments remain within the scope of the present invention.

In one embodiment, the magnetic attachment system 16 may include a first mounting plate 44 for carrying the plurality of magnets 40 and a second mounting plate 46 for carrying the plurality of magnetic attraction elements 42. In this embodiment, the first mounting plate 44 may be configured to be connected to the urn support 18 and the second mounting plate 46 may be configured to be connected to the urn 10 (or vice versa depending on the configuration of the magnetic attachment system 16 as described above). By way of example and without limitation, the first mounting plate 44 and the second mounting plate 46 may be bonded to the urn support 18 and urn 10, respectively. However, in alternative embodiments, the mounting plates 44, 46 may be fixed to their underlying structures 18, 10 with one or more fastening elements or connection arrangements, such as welding. In one alternate embodiment, the first and second mounting plates 44, 46 may be embedded or otherwise encased within their respective underlying structures 18, 10. In one embodiment, the plurality of magnets 40 may be attached to a side of the first mounting plate 44 (e.g., its top or bottom side). In another embodiment, the first mounting plate 44 may include bores 48 formed therein that receive the magnets 40 within the bores 48. For example, the magnets 40 may be bonded within the bores 48. In a similar manner, the plurality of magnetic attraction elements 42 may be attached to a side of the second mounting plate 46 (e.g., its top or bottom side). In another embodiment, the second mounting plate 46 may include bores 48 formed therein that receive the magnetic attraction elements 42 within the bores 48. For example, the magnetic attraction elements 42 may be bonded within the bores 48.

In one embodiment, the first mounting plate 44 may be formed from a non-magnetic material, a paramagnetic material (i.e., slightly attracted to magnets), or a ferromagnetic material. By way of example, and without limitation, the first mounting plate 44 may be formed from plastic or steel. Other materials for the first mounting plate 44 may also be possible. The second mounting plate 46 may similarly be formed from a non-magnetic material, a paramagnetic material, or a ferromagnetic material. By way of example and without limitation, the second mounting plate 46 may be formed from plastic or steel. Other materials for the second mounting plate 46 may also be possible. In one embodiment, the first mounting plate 44 may be circular in shape with a diameter Dₘ₁. In a similar manner, the second mounting plate 46 may be circular in shape with a diameter Dₘ₂. In a preferred embodiment, the first mounting plate 44 and the second mounting plate 46 may have substantially the same size and shape. The size and shape of the mounting plates 44, 46 may be determined, for example, by the size and shape of the urn 10, as will be made clear below. It should be recognized, however, that the first and second mounting plates 44, 46 may have different sizes and shapes (and may be the same or different from each other) and remain within the scope of the present invention.

The plurality of magnets 40 is configured to be incorporated with the first mounting plate 44 in a first pattern in which each of the plurality of magnets 40 is spaced apart from each other by some amount. The first pattern may take a wide range of configurations in the first mounting plate 44. In one embodiment, for example, the plurality of magnets 40 may be distributed along a circumference of a circle having a first radius relative to a first central axis. In one embodiment, the plurality of magnets 40 may be uniformly distributed along the circumference of the circle. In an alternative embodiment, however, the plurality of magnets 40 may be non-uniformly distributed along the circumference of the circle. The number of magnets in the plurality of magnets 40 may vary. In the example shown, there are four magnets 40. However, there can be more or less magnets in the plurality of magnets 40 in various alternative embodiments. The size of the magnets 40 may be varied to provide the desired number of magnets (e.g., for a desired magnetic attraction force F or threshold T), so long as there is a gap formed between adjacent magnets 40.

In a similar manner, the plurality of magnet attraction elements 42 is configured to be incorporated with the second mounting plate 46 in a second pattern in which each of the magnet attraction elements 42 is spaced apart from each other by some amount. The second pattern may take a wide range of configurations in the second mounting plate 44. In one embodiment, for example, the magnet attraction elements 42 may be distributed along a circumference of a circle having a second radius relative to a second central axis. In one embodiment, the magnet attraction elements 42 may be uniformly distributed along the circumference of the circle. In an alternative embodiment, however, the magnet attraction elements 42 may be non-uniformly distributed along the circumference of the circle. The number of magnet attraction elements in the plurality of magnet attraction elements 42 may vary. In the example shown, there are four magnet attraction elements 42. However, there can be more or less magnet attraction elements 42 in the plurality of magnet attraction elements 42 in various alternative embodiments. The size of the magnet attraction elements 42 may be varied to provide the desired number of magnet attraction elements (e.g., for a desired magnetic attraction force F or threshold T), so long as there is a gap formed between adjacent magnet attraction elements 42.

In a preferred embodiment, the first pattern in the first mounting plate 44 may substantially correspond to the second pattern in the second mounting plate 46. However, it should be recognized that arrangements where the first and second patterns do not correspond to each other may be possible and remain within the scope of the present invention. Additionally, the first and second patterns may have different configurations as that described above. By way of example, and without limitation, the first pattern and the second pattern may include an array of a certain number of rows and columns, e.g., a 2x2 or 3x3 array of magnets 40 and/or magnetic attraction elements 42. Thus, aspects of the invention should not be limited to the first and second patterns illustrated in the figures and shown above.

It should be recognized that the inclusion of the mounting plates 44, 46 for carrying the plurality of magnets 40 and the plurality of magnetic attraction elements 42 may be optional. In this regard, in an alternative embodiment, the plurality of magnets 40 and the plurality of magnetic attraction elements 42 may be associated with the urn support 18 and the urn 10 without the mounting plates 44, 46. By way of example, the plurality of magnets 40 may be connected to the underside of the top wall 32 of the urn support 18 without the mounting plate 44. In a further alternative embodiment, only one of the mounting plates 44, 46 may be omitted while the other of the mounting plates is retained. For example, the second mounting plate 46 may be retained for securing the plurality of magnetic attraction elements 42 to the urn 10 while the first mounting plate 44 may be omitted and the plurality of magnets 40 is associated with the urn support 18 without a mounting plate.

As illustrated in Figs. 2 and 3A, the second mounting plate 46 may be configured to be mounted to the urn 10. More particularly, the second mounting plate 46 may be configured to be mounted to the bottom wall 22 of the urn 10, such as by bonding, fastening elements, welding, etc. The plurality of magnetic attraction elements 42 are incorporated with the second mounting plate 46 such that a bottom surface 50 is flat, i.e., the magnetic attraction elements 42 are flush with the bottom surface of the mounting plate 42. In this way, the second mounting plate 46 provides an ideal surface for supporting the urn 10 on the surface 12 of the urn support 18. As noted above, the size and shape of the second mounting plate 42 may be commensurate with the size and shape of the bottom wall 22 of the urn 10. In one embodiment, the second mounting plate 42 may be just slightly smaller in size than the bottom wall 22 of the urn 10.

As shown in Figs. 2 and 3A, in one embodiment, the urn support 18 may include a seat 52 in the surface 12 for receiving the urn 10 on the urn support 18. In one embodiment, the seat 52 may include a recess formed in the surface 12. In an alternative embodiment, the seat 52 may include a raised platform for receiving the urn 10. The seat 52 may be shaped and sized to generally correspond with the shape and size of the bottom wall 34 of the urn 10. The first mounting plate 44 may be configured to be associated with the seat 52. In this regard, the first mounting plate 44 may have a shape and size to fit within the seat 52. Fig. 3A, for example, illustrates the first mounting plate 44 disposed within a cavity 54 in the surface 12 of the urn support 18. In one embodiment, the plurality of magnets 40 may be received within respective bores 58 formed in the urn support 18. In one embodiment, the first mounting plate 44 may form a bottom wall to the cavity 54 in the surface 12 of the urn support 18 such that the plurality of magnets 40 are not visible from outside the urn support 18. Alternatively, the urn support 18 may include a cap or cover 56 for forming the bottom wall of the cavity 54, and the first mounting plate 44 may be positioned beneath the cover 56. Again, in this way, the first mounting plate 44 and the plurality of magnets 40 carried thereby are generally not visible to those viewing the urn support 18 or the urn 10 when positioned thereon.

The use of the magnetic attachment system 16 for attaching and detaching the urn 10 from the surface 12 of the urn support 18 will now be described. As illustrated in Figs. 3A and 3B, as the urn 10 is brought into proximity of the seat 52 in the surface 12 of the urn support 18, the magnetic attraction force F between the urn 10 and the surface 12 of the urn support 18 starts increasing, thereby drawing the urn 10 toward the surface 12. As the urn 10 is being drawn toward the surface of the urn support 18, the urn 10 will reorient itself (e.g., turn or rotate slightly in the hands of funeral personnel) so as to maximize the magnetic attraction force F between the plurality of magnets 40 and the plurality of magnetic attraction elements 42. This maximum in the magnetic attraction force F is generally achieved when the plurality of magnets 40 and the plurality of magnetic attraction elements 42 form a plurality of vertically aligned magnet/element pairs, as best shown in Fig. 3B. In this configuration, the urn 10 has an "aligned" orientation. In the aligned orientation, the magnetic attraction force F is at its maximum and is configured to be above the threshold force T for securing the urn 10 to the urn support 18 in the normal course. For example, in this aligned orientation, the urn 10 is expected to not move and remain upright during funeral activities (e.g., transport, display, etc.). Thus, as the urn 10 is brought into contact with the surface 12 of the urn support 18, the urn 10 aligns itself automatically (i.e., self-aligns) to be in the aligned orientation and no further action by funeral personnel is required to secure the urn 10 to the surface 12 of the urn support 18. Depending on the first and second patterns of the plurality of magnets 40 and the plurality of magnetic attraction elements 42, the urn 10 may have at least one and preferably a plurality of aligned orientations on the seat 52 of the urn support 18. By way of example, and without limitation, with the first and second patterns as described above (e.g., with four magnets 40 and four magnetic attraction elements 42 uniformly distributed about a circle), there may be four aligned orientations of the urn 10 on the seat 52 of the urn support 18.

At some point during and/or after the funeral service, it may be desirable to remove the urn 10 from the surface 12 of the urn support 18. In the aligned orientation of the urn 10, however, the force required to remove the urn 10 from the surface 12 of the urn support 18 exceeds the threshold force T, which may be quite high and difficult for funeral personnel to overcome. Aspects of the present invention are directed to decreasing the magnetic attraction force F between the urn 10 and the urn support 18 to a level below the threshold force T, and preferably to a level sufficient to allow funeral personnel to remove the urn 10 with a reasonable amount of force (i.e., make it easier to lift the urn 10 off of the urn support 18).

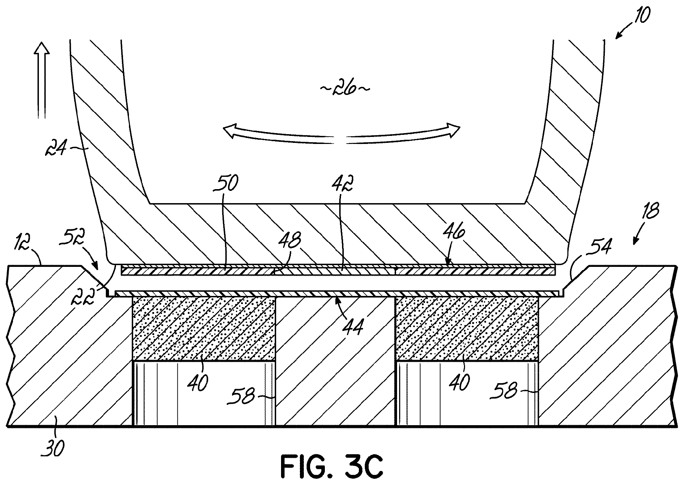

As perhaps best illustrated in Fig. 3C, this may be achieved in one embodiment, by first rotating the urn 10 along its central axis while on the surface of the urn support 18 to an orientation where the plurality of magnets 40 and the plurality of magnetic attraction elements 42 become vertically misaligned. As the plurality of magnets 40 and the plurality of magnetic attraction elements 42 become vertically misaligned, the magnetic attraction force F between the urn 10 and the urn support 18 starts to decrease. Due to the symmetry of the first and second patterns as described above, the magnetic attraction force F between the urn 10 and the urn support 18 will reach a minimum at some point in its rotation about the urn's central axis. For example, if adjacent magnets 40 and magnetic attraction elements 42 are separated by an angle of 90 degrees along their respective circles, a turn of the urn 10 of about 45 degrees from the vertically aligned orientation will provide the minimum magnetic attraction force F. Any orientation of the urn 10 where the magnetic attraction force F is below the threshold force T may be referred to as a misaligned orientation. Preferably, however, the misaligned orientation may be where the magnetic attraction force F is at a minimum.

Once the urn 10 has been rotated from the aligned orientation to the misaligned orientation, the urn 10 may be lifted off of the surface 12 of the urn support 18. As noted above, the amount of force to lift the urn 10 off of the surface 12 of the urn support 18 is less than the threshold force T and is configured to be manageable by funeral personnel. This approach works because the force that it takes to rotate the urn 10 while in engagement with the surface 12 of the urn support 18 is less than the pull off force when in the aligned orientation. More particularly, the friction force F_{f} is the primary force to be overcome in order to rotate the urn 10 while on the surface 12 of the urn support 18. The friction force F_{f} is related to the magnetic attraction force F by the coefficient of friction, which can be relatively low. Thus, the force of funeral personnel required to rotate the urn 10 while on the surface 12 of the urn support 18 may be significantly reduced from the magnetic attraction force F in the aligned position, which as noted above is above the threshold force T and may be relatively high. Thus, by using two relatively smaller forces (one to rotate first and one to pull off) funeral personnel my remove the urn 10 from the urn support 18 using a reasonable amount of force within the capability of most funeral personnel.

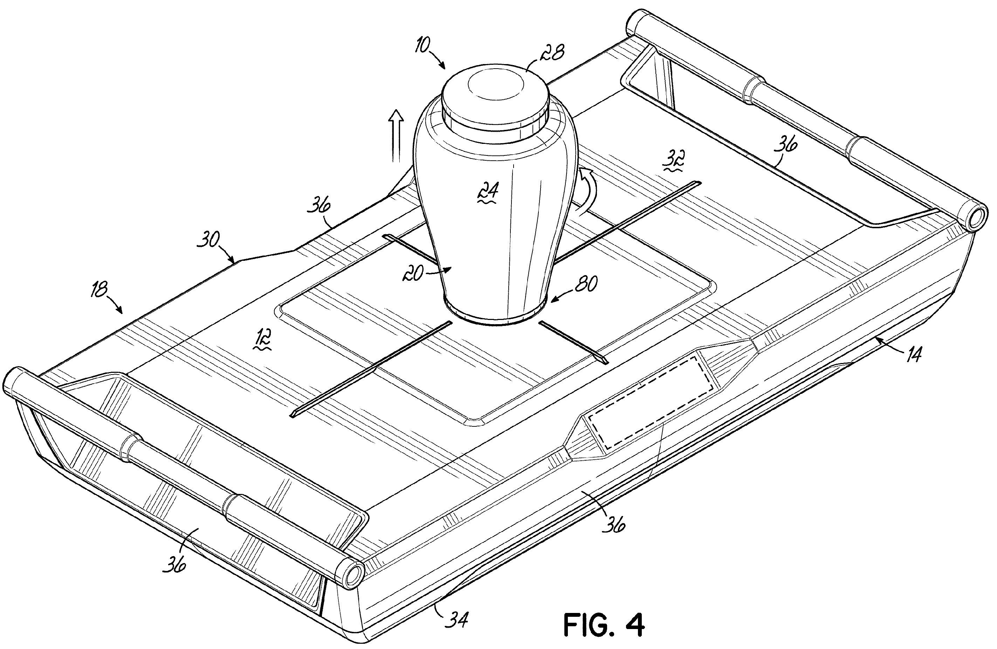

Turning now to Figs. 4-10D, various embodiments of a twist attachment system 80 are shown for selectively securing the funeral urn 10 to the funeral article 14 in an alternative embodiment of the invention. Unless otherwise stated, similar reference numerals and properties describing the magnetic attachment system 16 above also apply to the twist attachment system 80. The twist attachment system 80 may include a first twist mechanism 82 and a second twist mechanism 84 that do not utilize magnets. In this embodiment, the urn 10 is configured to be secured to the first twist mechanism 82. The first twist mechanism 82 is configured to rotate between an unlocked position and a locked position. The first and second twist mechanisms 82, 84 are configured to latch together when the first twist mechanism 82 is rotated to the locked position such that the urn 10 remains attached to the surface 12 of the article 14 during funeral services or transportation of the urn 10. In other words, in the locked position, the urn 10 and the funeral article 14 are prevented from moving in an axial direction (e.g., vertical direction) toward and away from each other. In this regard, the urn 10 may be limited only to rotational movements when the first and second twist mechanisms 82, 84 are in the locked position. In this way, the twist attachment system 80 prevents the urn 10 from undesirably moving, tipping, etc. so as to become detached or disengaged from the surface 12 of the article 14. In the unlocked position of the first and second twist mechanisms 82, 84, however, the urn 10 and the funeral article 12 are permitted to move relative to each other in the axial direction. Thus, in the unlocked position, the urn 10 may be separated from the article 14 through axial relative movement.

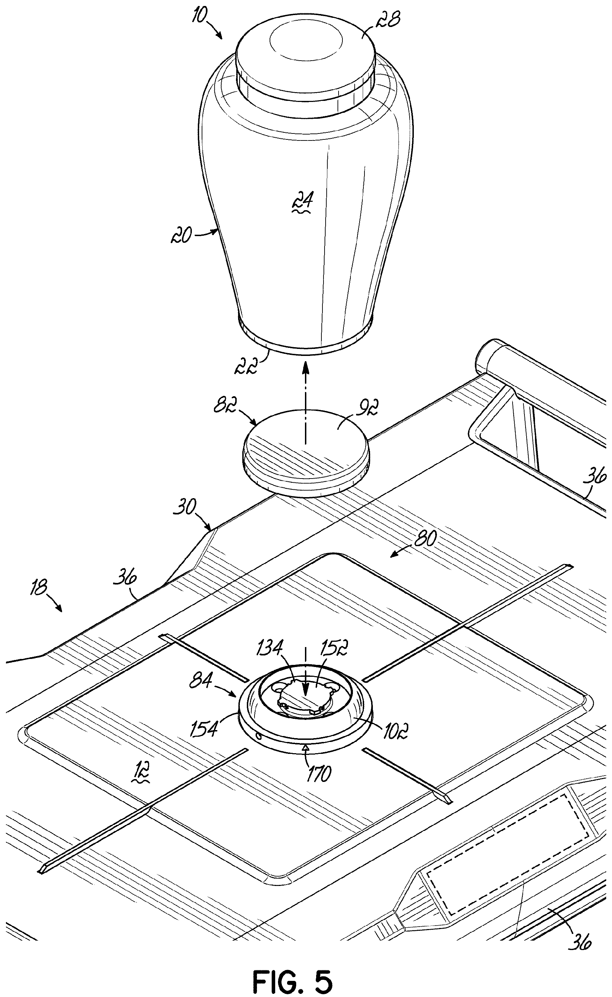

Referring now to Figs. 4 and 5, the figures show the entire twist lock attachment system 80 assembly according to an embodiment of the invention. Fig. 4 illustrates the urn 10 located on the surface 12 of the article 14 during a funeral service. In accordance with one embodiment of the invention, the urn 10 is secured to the surface 12 of the article 14 with the twist attachment system, generally shown at 80, that will be described in detail below. The first twist mechanism 82 includes a top surface 92 configured to be connected to the urn bottom wall 22. For example, the bottom wall 22 of the urn 10 may be secured to the top surface 92 of the first twist mechanism 82 with adhesive strips, magnets, fasteners, or by any other means understood by one having ordinary skill in the art. In an alternative embodiment, the first twist mechanism 82 may be embedded or integrated in the urn 10.

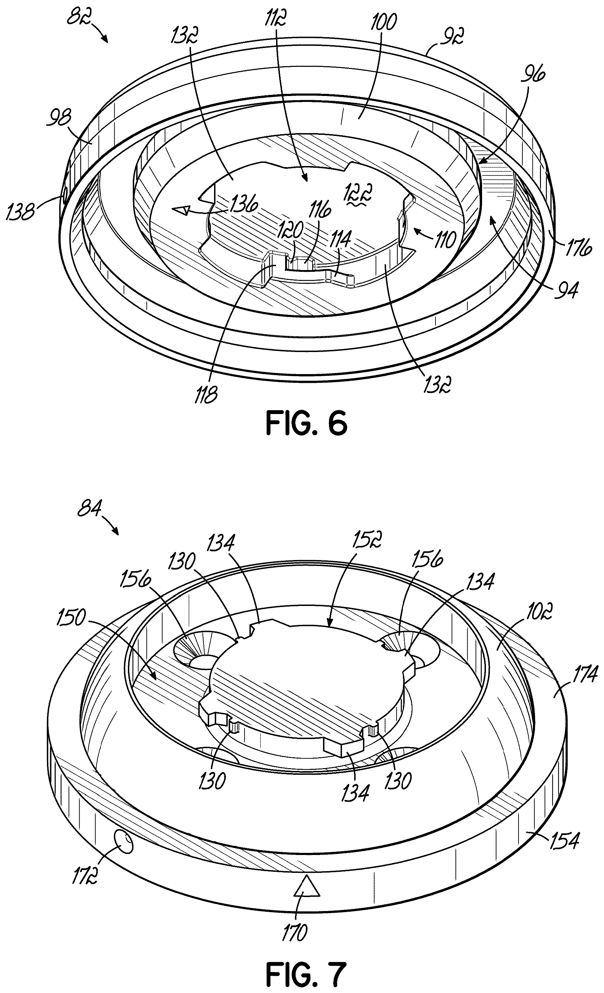

With reference to Fig. 6, the first twist mechanism 82 is configured to attach to or integrated with the bottom wall 22 of the urn 10. In one embodiment, the first twist mechanism 82 may have a circular shape defining a first central axis. In one embodiment, the first twist mechanism 82 includes a receiving channel 94, an inner locking protrusion 96, and an outer wall 98. The receiving channel 94 is defined by an outer surface 100 of the inner locking protrusion 96 and the outer wall 98. As explained below, the receiving channel 94 is configured to receive a stabilizing protrusion 102 (Fig. 7) located on the second twist mechanism 84 and may provide further support to the twist attachment system 80 by guiding protruding portions of the second twist mechanism 84 into engagement with the first twist mechanism 82.

The inner locking protrusion 96 further includes at least one and preferably a plurality of locking features 110 and a cavity 112. In one embodiment, the locking features 110 may be uniformly circumferentially spaced about the first central axis. Each locking feature 110 includes a lower boundary 114, a first locking wall 116, and a second locking wall 118. The second locking wall 118 may extend a greater distance towards the first central axis of the first twist mechanism 82 than the first locking wall 116 (i.e., the first and second locking walls 116, 118 have different radial heights). The circumferential space between the first and second locking walls 116, 118 may further define a groove 120. The groove 120 is configured to receive a first locking tab 130 (Fig. 7) located on the second twist mechanism 84 and described in greater detail below. The first and second locking walls 116, 118 extend from the lower boundary 114 to the uppermost surface 122 of the cavity 112 such that they may block the first locking tab 130 and a second locking tab 134 (Fig. 7) from rotating past the second locked position. Each locking feature 110 is separated by a spacer 132 configured to allow the first and second locking tabs 130, 134 to freely enter the cavity 112. The inner locking protrusion 96 may further include a starting arrow 136 that is configured to be radially aligned with a front marking 138 located on the outer wall 98 of the first twist mechanism 82. When attaching the first twist mechanism 82 to the urn bottom wall 22, the front marking 138 may be aligned with a side wall 24 of the urn body 20 that is desired to be front facing.

With reference to Fig. 7, the second twist mechanism 84 is shown. The second twist mechanism 84 may also be circular in shape having a second central axis and is configured to interlock with the first twist mechanism 82. The second twist mechanism 84 includes the stabilizing protrusion 102, a locking channel 150, a locking boss 152, and a base portion 154. The second twist mechanism 84 may be configured to attach to the surface 12 of the funeral article 14 through the use of thumb screws, bolts, adhesive, or other attachment means. For example, thumb screws may be screwed into a plurality of through holes 156 located on the base portion 154 to connect the second twist mechanism 84 to the surface 12. In an alternative embodiment, the second twist mechanism 84 may be embedded or integrated with the funeral article 14.

The stabilizing protrusion 102 may extend upwardly from the base portion 154 such that it may fit inside the receiving channel 94 of the first twist mechanism 82. The locking boss 152 may be located within the boundary of the stabilizing protrusion. The locking boss 152 may also extend upwardly from the base portion 154 and further includes a plurality of first and second locking tabs 130, 134. Each of the first and second locking tabs 130, 134 may be separated by a groove. For example, in one embodiment, the plurality of first and second locking tabs 130, 134 may be uniformly distributed along the circumference of the locking boss 152. The second locking tab 134 may be larger than the first locking tab 130 (i.e., have different radial heights relative to the second central axis) such that the first locking wall 116 may not prevent rotation of the first locking tab 130 but may prevent rotation of the second locking tab 134. As described above, the first locking tab 130 is configured to move beyond the first locking wall 116 and slide down into the groove 120 of the first twist mechanism 82. After the groove 120 receives the first locking tab 130, the second locking wall 118 may prevent the first locking tab 130 from any additional rotation.

The base portion 154 further includes a first arrow 170, an alignment mark 172, and a top base surface 174. The first arrow 170 is positioned a distance away from the alignment mark and may correspond to one of the sets of first and second locking tabs 130, 134. The first arrow 170 is configured to correspond with front marking 138 and, when the first twist mechanism 82 is placed on top of the second twist mechanism 84, defines the first unlocked position of the twist attachment system 80. The alignment mark 172 may be located in a front facing position on the funeral article 14 such that when the first twist mechanism 82 is rotated in the clockwise direction, the front marking 138 may align with the alignment mark 172 and allow for the desired front face of the urn 10 to be visible while in the second locked position. The top base surface 174 is configured to receive the bottom edge 176 of the first twist mechanism 82 such that the first twist mechanism 82 is generally supported by the base portion 154 of the second twist mechanism 84.

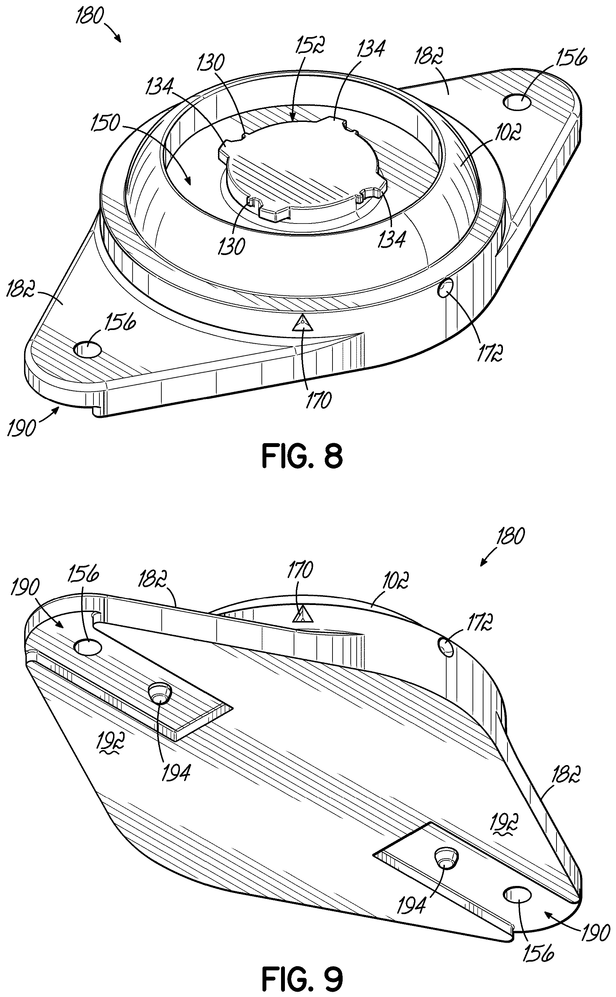

With reference to Figs. 8-9, a t-slot mechanism 180 according to another embodiment of the invention is shown. Unless otherwise stated, similar reference numerals and properties describing the second twist mechanism 84 above also apply to the t-slot mechanism 180. However, the holes 156 on the t-slot mechanism 180 may be placed on at least two extension portions 182. The extension portions 182 on the t-slot mechanism 180 may extend beyond the circular base portion 154 on opposite sides thereof and may have a generally triangular shape. However, a person having ordinary skill in the art would understand that other shapes may be utilized for the extension portions 182.

Some funeral articles, such as display pillars within a hearse, may include a channel that allows for an item to slide from one end of the article's surface to the other end. The t-slot mechanism 180 allows for the twist attachment system 80 to utilize this feature and allows for the urn 10 to slide from one end of a funeral article 14 to the other end. The t-slot mechanism 180 may further include at least two sliding channels 190 located on the bottom surface 192 of the extension portions 182. Each sliding channel 190 may further include an aligning protrusion 194 that is configured to slide along the channel located on the funeral article 14.

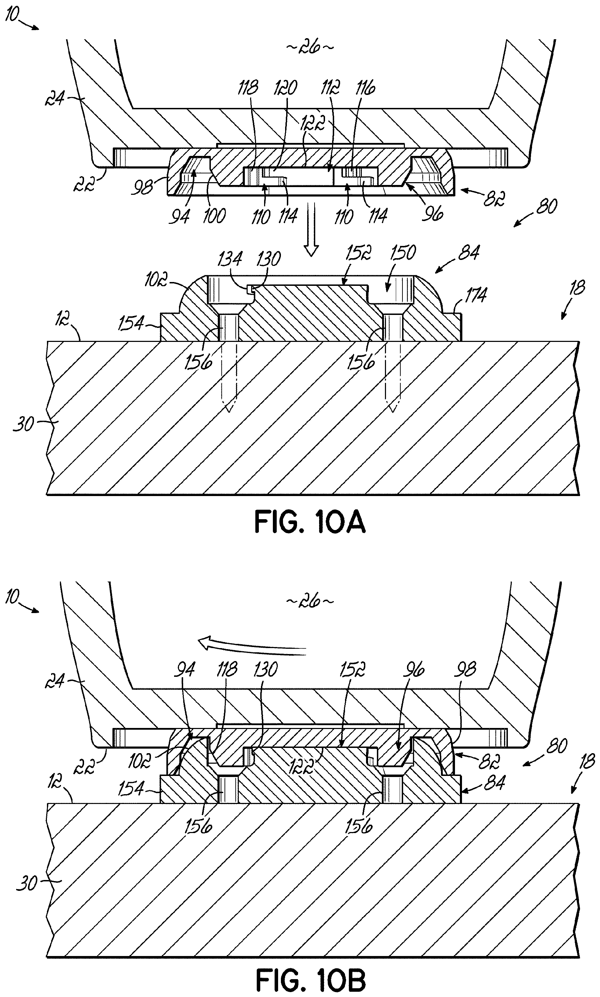

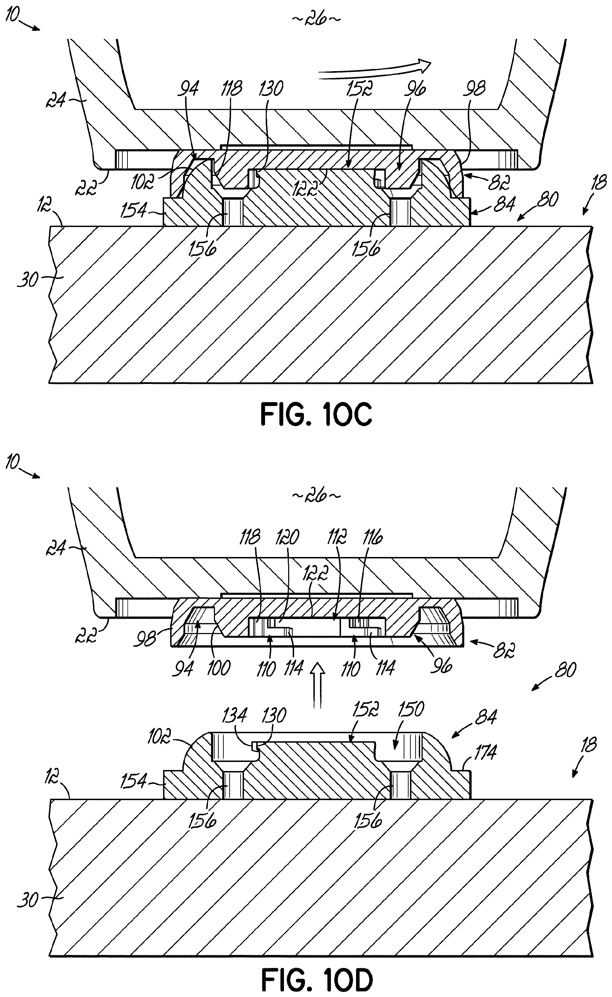

The use of the twist attachment system 80 for attaching and detaching the urn 10 from the surface 12 of the urn support 18 will now be described. As illustrated in Figs. 10A-10B, as the urn 10 is brought into proximity of the second twist mechanism 84, the front marking 138 on the first twist mechanism 82 may be vertically aligned with the first arrow 170 on the second twist mechanism 84. After the front marking 138 is aligned with the first arrow 170, the urn 10 may be pushed down such that the first twist mechanism 82 receives the second twist mechanism 84, defining the unlocked position. From the unlocked position, the urn 10 and first twist mechanism 82 may be rotated in a clockwise direction, thereby engaging the first and second locking tabs 130, 134 on the second twist mechanism 84 with the locking features 110 on the first twist mechanism 80. When the first locking wall 116 is rotated past the first locking tab 130 such that the first locking tab 130 may rest within the groove 120, the front marking 138 on the first twist mechanism 82 will vertically align with the alignment mark 172 on the second twist mechanism 84. This defines the locked position. In locked position, the desired front facing side of the urn 10 will be visible and the urn 10 will be locked into position such that it will not move during the funeral service or during transport. The engagement of the first locking tab 130 with the groove 120 provides a snap fit feature that indicates the locked position. This engagement also prevents the urn 10 from unintentionally moving back toward the unlocked position. Moreover, in the locked position, the urn 10 and the funeral article 14 are prevented from moving axially relative to each other (i.e., away from each other), thereby securing the urn 10 to the surface 12 of the article 14.

At some point during and/or after the funeral service, it may be desirable to remove the urn 10 from the surface 12 of the urn support 18. In the locked position of the of the twist attachment system 80, however, the first twist mechanism is prevented from moving in the axial (e.g., vertical) direction because the first and second locking tabs 130, 134 block the lower boundary 114, securing the first twist mechanism 82 to the second twist mechanism 84. As perhaps best illustrated in Fig. 10C-10D, rotating the urn 10, thereby rotating the first twist mechanism 82, in the counterclockwise direction allows the first and second locking tabs 130, 134 to be positioned in the spacer 132 rather than within a locking feature 110. Once the first twist mechanism 82 is returned to the unlocked position wherein the front marking 138 is aligned with the first arrow 170, the urn 10 may be removed from the surface 12 of the urn support 18. In other words, in the unlocked position, the axial movement between the urn 10 and the funeral article 13 is permitted and the urn 10 may be separated from the article 14.

While the present invention has been illustrated by the description of various embodiments and while these embodiments have been described in some detail, it is not the intention of the Applicant to restrict or in any limit the scope of the invention to such detail. Additional advantages and modifications will readily appear to those skilled in the art. The invention in its broader aspects is therefore not limited to the specific details and illustrative examples shown and described. For example, while the above attachment systems were described for securing a funeral urn to a surface of an article, aspects of the invention are not so limited. In this regard, the attachment systems may be used to secure other funeral items to the surface of funeral-related articles. For example, the attachment systems may be used to secure flower vases/holders, memento holders, and other containers to a surface of a funeral-related article. Accordingly, departures may be made from such details without departing from the scope of the general inventive concept.

## Claims

1. An attachment system for securing a funeral urn to a surface of a funeral article, comprising:
a first twist mechanism configured to be associated with the funeral urn, the first twist mechanism including one of an inner locking protrusion or a locking boss;
a second twist mechanism configured to be associated with the surface of the article, the second twist mechanism including the other of the inner locking protrusion or the locking boss,
wherein when the first twist mechanism and the second twist mechanism are engaged with each other, the first twist mechanism is rotatable relative to the second twist mechanism to define a locked position, whereby the first and second twist mechanisms are prohibited from axial movement relative to each other, and an unlocked position, whereby the first and second twist mechanisms are permitted to move axially relative to each other.

2. The attachment system of claim 1, wherein:
the inner locking protrusion includes at least one locking feature;
the locking boss includes at least one locking feature;
the at least one locking feature on the inner locking protrusion is engaged with the at least one locking feature in the locked position; and
the at least one locking feature on the inner locking protrusion is disengaged with the at least one locking feature on the locking boss in the unlocked position.

3. The attachment system of claim 2, wherein the at least one locking feature on the inner locking protrusion comprises:
a first locking wall;
a second locking wall; and
a groove disposed between the first and second locking walls,
wherein the first locking wall and the second locking wall have different heights relative to a central axis defined by the inner locking protrusion.

4. The attachment system of claim 3, wherein the inner locking protrusion includes a plurality of locking features, the plurality of locking features being distributed in a circumferential direction about the central axis of the inner locking protrusion, and wherein adjacent locking features are separated from each other by a spacer, preferably wherein the plurality of locking features on the inner locking protrusion are uniformly distributed in the circumferential direction about the central axis of the inner locking protrusion.

5. The attachment system of claim 2, wherein the at least one locking feature on the locking boss comprises:
a first locking tab;
a second locking tab; and
a groove disposed between the first and second locking tabs,
wherein the first locking tab and the second locking tab have different heights relative to a central axis defined by the locking boss.

6. The attachment system of claim 5, wherein the locking boss includes a plurality of locking features, the plurality of locking features being distributed in a circumferential direction about the central axis of the locking boss, preferably wherein the plurality of locking features on the locking boss are uniformly distributed in the circumferential direction about the central axis of the locking boss.

7. The attachment system of claim 1, wherein the first twist mechanism includes at least one alignment feature, wherein the second twist mechanism includes at least one alignment feature, and wherein the alignment features are configured to indicate the locked and unlocked positions of the first and second twist mechanisms.

8. The attachment system of claim 1, wherein the second twist mechanism includes a pair of extension portions extending away from a central axis of the second twist mechanism and on opposite sides thereof, preferably wherein each of the extension portions includes at least one slide channel.

9. A funeral arrangement, comprising:
a funeral urn including an urn body having a bottom wall and at least one side wall extending from the bottom wall that defines an interior cavity;
a funeral article including a surface; and
the attachment system of claim 1,
wherein one of the first twist mechanism or the second twist mechanism is associated with the funeral urn and the other of the first twist mechanism and the second twist mechanism is associated with the funeral article, and
wherein when the first twist mechanism and the second twist mechanism are engaged with each other, the funeral urn is rotatable relative to the funeral article to define a locked position, whereby the funeral urn and funeral article are prohibited from axial movement relative to each other, and an unlocked position, whereby the funeral urn and the funeral article are permitted to move axially relative to each other.

10. The funeral arrangement of claim 9, wherein the first twist mechanism is connected to or forms part of the bottom wall of the funeral urn.

11. The funeral arrangement of claim 9, wherein the second twist mechanism is connected to or forms part of the surface of the funeral article.

12. The funeral arrangement of claim 9, wherein the funeral article includes one of a floor, compartment, or platform of a funeral vehicle, a ceremonial cart, a bier or dais, and a table.

13. A method of handling a funeral urn during a funeral service, comprising:
providing the funeral urn, the funeral urn including an urn body having a bottom wall and at least one side wall extending from the bottom wall that defines an interior cavity;
providing the funeral article, the funeral article including a surface;
providing the attachment system of claim 1, wherein one of the first twist mechanism or the second twist mechanism is associated with the funeral urn and the other of the first twist mechanism and the second twist mechanism is associated with the funeral article;
positioning the funeral urn on the funeral article such that the first twist mechanism engages with the second twist mechanism; and
rotating the funeral urn relative to the funeral article in a first rotation direction to the locked position thereby securing the funeral urn to the funeral article.

14. The method of claim 13, wherein positioning the funeral urn on the funeral article further comprises aligning at least one alignment element on the first twist mechanism with at least one alignment element on the second twist mechanism prior to engaging the first and second twist mechanisms.

15. The method of claim 13, further comprising:
rotating the funeral urn relative to the funeral article in a second rotation direction opposite to the first rotation direction to the unlocked position; and
separating the funeral urn from the funeral article.
